# EUROPÄISCHE PATENTSCHRIFT

(11) **EP 1 594 590 B1**
(45) Veröffentlichungstag und Bekanntmachung des Hinweises auf die Patenterteilung: **02.04.2008**
(21) Anmeldenummer: 03799446.4
(22) Anmeldetag: 24.12.2003
(51) Int. Cl.: B01D 46/42, B01D 46/10, B01D 46/24

(54) **STAUBFILTER FÜR DEN EINSATZ IN GASGEFÄHRDETEN BETRIEBEN**
DUST FILTER FOR USING IN OPERATIONS ENDANGERED BY GASES
FILTRE A POUSSIERE DESTINE A ETRE UTILISE DANS DES EXPLOITATIONS EXPOSEES AU DANGER PROVOQUE PAR DES GAZ

(30) Priorität: 31.01.2003 DE 10303798; 10.12.2003 DE 10357684
(43) Veröffentlichungstag der Anmeldung: 16.11.2005
(73) Patentinhaber: CFT GMBH COMPACT FILTER TECHNIC, 45964 Gladbeck (DE)
(72) Erfinder: BOTH, Reinhold, 45889 Gelsenkirchen (DE)
(74) Vertreter: Schulte, Jens Michael
(86) Internationale Anmeldenummer: PCT/DE2003/004271
(87) Internationale Veröffentlichungsnummer: WO 2004/067149

(56) Entgegenhaltungen:
- WO-A-93/13303
- WO-A-96/13320
- DE-U- 29 815 687
- US-A- 5 259 190
- US-A- 5 868 807

## Beschreibung

Die Erfindung betrifft einen Trockenstaubfilter für den Einsatz in gasgefährdeten Betrieben, insbesondere im untertägigen Berg- und Tunnelbau mit einem aus Blech oder einem ähnlichen, elektrisch leitenden Werkstoff bestehenden Gehäuse, in dem ein oder mehrere den Staub aufnehmende und von dem staubhaltigen Wetterstrom durchströmte Filterelemente angeordnet sind, die ein den Staub zurückhaltendes und elektrisch leitend ausgeführtes Filtermaterial aufweisen und/oder entsprechend ausgebildet sind.

Derartige Staubfilter, auch als Trockenfilter bekannt, werden in den verschiedensten Industriebereichen eingesetzt, um die im Gewinnungs- oder Herstellungsprozess entstehenden Stäube möglichst frühzeitig und umfassend niederzuschlagen und damit aus dem Luft- bzw. Wetterstrom herauszunehmen. Dabei sind in einem meist aus Metall bestehenden Gehäuse aus einem Filtertuch oder einem entsprechenden Gewirk oder ähnlichen Material bestehende Filterelemente angeordnet, die von dem Luft- bzw. Wetterstrom durchströmt werden, wobei die Filterelemente den Staub beim Durchströmen zurückhalten, sodass dem Gehäuse ausgangsseitig entsprechend gereinigte Luft bzw. Wetter entströmen.

Diese Filterelemente werden durch Klopfen, Gegenstrom oder ähnliche Maßnahmen gereinigt, wobei der herabfallende Staub gesammelt und entsorgt wird. In gasgefährdeten Betrieben muss der Luft- bzw. Wetterstrom so weit gedrosselt werden, dass beim Auftreffen entsprechender Staubteilchen oder sonstiger vorn Wetterstrom mitgenommener Teilchen keine Funken entstehen können. Damit ist der Durchsatz solcher Entstauber bzw. Staubfilter stark reduziert und es müssen größere Anlagen angeschafft werden oder es müssen andere Wege der Entstaubung gesucht werden. Gerade in gasgefährdeten Betrieben und dabei insbesondere im untertägigen Bergbau muss außerdem kein die übrigen Anlagen und insbesondere die Filterselbstretter, die die in diesen Betrieben Beschäftigten schützen sollen, beeinträchtigende Stoffe freigesetzt werden. Solche Beeinträchtigungen können insbesondere beim Glimmen von Teilen der Filterelemente oder beim Brennen in die Umwelt gelangen, wobei die Vorschriften vorsehen, dass dann keine toxischen oder verklebenden Restgase in die Umwelt abgegeben werden. Die dort installierten Anlagen müssen dementsprechend so ausgebildet sein. In der US 5,868,807 A ist ein Staubfilter mit üblichen Filterelementen mit Drahtgitterabstützung beschrieben. Das Rohgas muss vor Erreichen der Filterelemente eine Schicht feinkörniges Material passieren. Über die Einsatzmöglichkeit in gasgefährdeten Bereichen und das Verhindern elektrostatischer Aufladungen ist nichts erwähnt. Die Honigwabenstruktur der Einrichtung gemäß der US 5,259,190 A ist für das Anzünden von Gas oder das Verbrennen von Kohlenstaub vorgesehen. Bei dem Filter für Dieselkraftmaschinen nach der WO 93/13303 sind die Filterkörper mit einer Energieversorgung verbunden. Von einer Verhinderung elektrostatischer Aufladungen ist nicht die Rede. Aus der DE 298 15 687 U1 ist ein Filter bekannt, bei dem das elektrisch leitend gemachte Filtermaterial über elektrisch leitende Elemente mit den aus Polyurethan bestehenden Endplatten verbunden sind. Eine direkte Verbindung mit dem Metallgehäuse sorgt für die Verhinderung schädlicher Aufladungen. Aus der WO-A-96/13320 ist ein ähnlicher Filter bekannt, nur dass der Leiter in den oberen Rahmen integriert ist. Es ist zwar vorgesehen, diesen Rahmen abdichtend auszubilden, und zwar zu benachbarten Filterabteilen, nicht aber zum Gehäuse (Blech), das leitend ausgeführt ist. Eine gasdichte Ausführung zur Umwelt ist nicht offenbart. Eine Ausführung des Rahmens aus weicherem Harz ist untertage wegen Statikproblemen nicht zulässig.

Der Erfindung liegt daher die Aufgabe zugrunde, einen Trockenstaubfilter zu schaffen, der auch in gasgefährdeten Betrieben eingesetzt werden und dabei keine Gefährdung für die Untertage eingesetzten Filterselbstretter auslösen kann.

Die Aufgabe wird gemäß der Erfindung dadurch gelöst, dass zwischen dem Gehäuse und dem Rand des Filterelementes eine gasundurchlässige, den Austritt schädigender Stoffe aus dem Gehäuse erschwerende oder verhindernde Dichtung in Form einer elastischen Dichtwulst vorgesehen ist und wobei das elektrisch leitende Filtermaterial mit einem elektrischen Leiter in Form einer Kupferlitze an mehreren Stellen leitend mit dem Filtermaterial verbunden ist, der unter Umgehung der elastischen Dichtung mit dem Gehäuse verbunden ist, sodass von der Innenseite des Randes des Filterelementes her eine leitende Verbindung mit dem aus Metall bestehenden Gehäuserahmen hergestellt ist.

Dadurch ist es überraschend sicher und einfach möglich, solche Staubfilter und daraus bestehende Entstauber auch in gasgefährdeten Bereichen einzusetzen, ohne dass die Gefahr besteht, dass es zu Gefährdungen durch elektrostatische Aufladung oder Ähnliches kommen kann. Aber selbst dann, wenn doch ein Brand entstehen sollte, können schädigende Stoffe zunächst nicht ohne weiteres aus dem Gehäuse austreten. Sollte dies in geringem Umfange doch passieren, so sind die austretenden Gase für die Filterselbstretter unschädlich, sodass auch in Extremfällen eine Gefährdung der in diesem Betrieb bzw. Bereich tätigen Personen nicht vorhanden ist. Durch die besondere Ausbildung des jeweiligen Filterelementes und der daraus hergestellten Entstauber ist sichergestellt, dass bei auf die Filterelemente auftreffende kleine Staubpartikel eine elektrische Aufladung nicht entstehen kann, weil das Filtermaterial selbst elektrisch leitend ausgeführt ist und die entstehenden elektrischen Ströme über den elektrischen Leiter so weitergeleitet werden, dass sie das aus Blech bestehende Gehäuse erreichen und hier unschädlich werden. Entweder wird das aus Blech bestehende Gehäuse irgendwie geerdet oder aber aufgrund der entsprechenden Verteilung sind die entstehenden Ströme völlig ungefährlich. Damit sind auch eventuelle Entzündungen weitgehend vermieden. Dabei ist weiter vorgesehen, dass der elektrische Leiter mit dem Filtermaterial leitend an mehreren Stellen verbunden ist. So ist auch bei entsprechenden rüttelnden Bewegungen oder sonstigen Belastungen der innige Kontakt zwischen elektrischem Leiter und Filtermaterial sichergestellt.

Nach einer zweckmäßigen Weiterbildung der Erfindung ist vorgesehen, dass das Filterelement mit dem Gehäuse über die Innenseite des Filterelementes vorstehende Halteelemente verbunden und der elektrische Leiter daran und am Filtermaterial leitend festgelegt ist. Das Filterelement ist in der Regel über Halteschrauben am Gehäuse festgelegt oder durch ähnliche Elemente, um einen Austausch dieser Filterelemente zu ermöglichen. Ist das Filterelement selbst nicht am Gehäuse festgelegt, sondern an einem wieder im Gehäuse verschiebbar oder sonstwie festlegbaren Teilrahmen, so kann auf jeden Fall immer sichergestellt werden, dass über die Erfindung die elektrostatische Aufladung des Gesamtelementes sicher verhindert wird. Die Halteelemente fixieren beim Anschrauben den elektrischen Leiter, der selbst mit dem elektrisch leitenden Filtermaterial leitend in Verbindung steht, sodass die geschilderten Probleme beim Auftreffen der mit hoher Geschwindigkeit eventuell auf das Filtermaterial auftreffenden Staubteilchen nicht auftreten können. Dies hat wie schon bei der Grundsatzerfindung den enormen Vorteil, dass bezüglich der durch das Gehäuse geführten Luft bzw. Wetter keine Rücksichten genommen werden müssen. Vielmehr können die optimalen Geschwindigkeiten gefahren werden, die eine optimale Auslastung des Entstaubers bzw. Staubfilters sicherstellen.

Eine weitere zweckmäßige Ausbildung sieht vor, dass der elektrische Leiter als Kupferlitze und das Filtermaterial auch Filterselbstretter im Brandfall nicht blockierend ausgebildet ist. Damit ist einmal eine einfache Verwirklichung der Überleitung der elektrischen Ladung sichergestellt und gleichzeitig erreicht, dass selbst im Extremfall, d. h. einem Brandfall eine Gefährdung der wichtigen Filterselbstretter nicht auftreten kann. Ein solches Material wird auch als ATEX-Material bezeichnet.

Der elektrische Leiter, der als Kupferlitze ausgebildet ist, wird gemäß einer Weiterbildung als das wellig ausgebildete und angeordnete Filtermaterial einfassend und zu den Halteelementen führende Endstücke aufweisend ausgeführt. Der elektrische Leiter liegt somit dicht am Filtermaterial an, sodass eine Entladung auf jeden Fall sichergestellt ist, vor allem weil das Filtermaterial von dem elektrischen Leiter eingefasst ist. Über den elektrischen Leiter mit seinen Endstücken wird die Verbindung über die Halteelemente zum aus Blech bestehenden Gehäuse hergestellt.

Ein Abrutschen der Endstücke des elektrischen Leiters von den Halteelementen wird sicher dadurch unterbunden, dass die Endstücke das Gewinde der als Schrauben ausgebildeten Halteelemente umfassende und darauf verschiebbare Schlaufen aufweisen. Es ist somit nur notwendig, die entsprechenden schlaufenförmigen Endstücke über das Gewinde der Halteelemente zu schieben und dann die Muttern aufzusetzen, sodass dann die elektrische Verbindung auf jeden Fall gesichert ist.

Das Entstehen elektrischer Aufladungen wird durch entsprechendes Filtermaterial verhindert, wobei die Erfindung hierzu vorsieht, dass das Filtermaterial mit Antistatikmaterial beschichtet oder damit getränkt ist und dass die Beschichtung die Oberfläche des Filtermaterials bewahrend ausgebildet ist. Dabei wird durch diese Ausbildung sichergestellt, dass das Filtermaterial dennoch seine eigentliche Aufgabe erfüllt, nämlich die Staubteilchen aus dem Wetterstrom herauszunehmen und "unschädlich" zu machen. Mit Antistatikmaterial beschichtetes Filtermaterial kann mit der heutigen Technik hergestellt werden, indem Antistatikmaterial z. B. in Form eines Salzes auf das eigentliche Filtermaterial bzw. das Filtertuch aufgebracht wird. Dabei ist sichergestellt, dass es durch den Wetterstrom nicht vorn Filtermaterial abgetrennt wird, bei feuchten oder gar Wassertropfen mitführenden Wettern sind allerdings Sondermaßnahmen erforderlich, die das Auftreffen solcher Wasserbestandteile verhindern bzw. ausschließen. Dabei werden die Staubteilchen sicher durch das Filtermaterial gebunden, weil nach einer Weiterbildung vorgesehen ist, dass das Filtermaterial eine Beschichtung aufweist, die eine schwer entflammbare, antistatische, microporöse Schaummembran bildet, die anströmseitig angeordnet ist. Insbesondere durch die microporöse Ausbildung der Membran ist sichergestellt, dass die Wetter bzw. die Luft durch das Filtermaterial hindurch geht und als gereinigte Luft abgeführt werden kann.

Die optimale microporöse Ausbildung der Schaummembran erreicht man insbesondere dann, wenn die Beschichtung ein Acrylatschaum oder PU-Schaum ist, dem Ruß oder Graphit beigemischt ist.

Die Ableitfähigkeit erreicht man insbesondere dadurch bzw. gibt sie dem Filtermaterial vor, indem in das Filtermaterial Kohlefasern, Salze oder Edelstahlfasern eingebunden sind. Damit können ableitende Komponenten sicher mit dem eigentlichen Filtermaterial in Verbindung gebracht werden, um so die Antistatik des Gesamtgewebes sicherzustellen.

Ein die Filterselbstretter auch im Extremfall, also beim Brennen, nicht beeinträchtigendes Filtermaterial ist das, das als Polyamid-Nadelfilz mit Stützgewebe ausgebildet ist. Dieses Filtermaterial ist darüber hinaus vorteilhaft auch selbsttragend, wobei diese Eigenschaft noch durch Zusätze unterstützt werden kann. Hierzu ist ergänzend vorgesehen, dass dem Filtermaterial die selbsttragende Eigenschaft ergebende Rezeptoren beigegeben sind, wobei die selbsttragende Eigenschaft noch durch Faltung oder ähnliche Maßnahmen unterstützt werden kann. Damit ergibt sich vorteilhaft ein Gewebe, das auf einen Rahmen verzichten kann, das also selbsttragend in die vorgeschriebene Position geschoben werden kann, um dort seine Funktion zu erfüllen, wobei durch weiter hinten noch genannte Merkmale deren Funktion noch verbessert wird.

Die Versteifung des Filtermaterials durch Rezeptoren wird gemäß einer Weiterbildung noch dadurch unterstützt, dass der Rand des Filterelementes mit dem Filtermaterial aus einer PU-Vergussmasse mit schwer entflammbaren Inhaltsstoffen hergestellt und das Filtermaterial rundum oder kopf- und fußseitig zusätzlich stützend bzw. einen Filterelementkopf und Filterelementfuß formend ausgebildet ist. Damit ergibt sich vorteilhaft ein insgesamt versteiftes Element, das sicher in die Arbeitsposition geschoben aber auch von dort aus ausgetauscht werden kann, wenn sich dies beim Abreinigen der einzelnen Filterelemente als notwendig erwiesen hat. Insbesondere die schon erwähnte microporöse Schaummembran führt darüber hinaus zu Entstaubungsgraden optimaler Größenordnung, wobei 0,1 mg/cm³ problemlos mit solchen Filterelementen zu erreichen sind.

Werden dem Gehäuse größere Mengen Feuchtigkeit mitführende Wetter zugeführt, so sieht die Erfindung dafür vor, dass das Filtergehäuse einen Filtereingang mit einem Verbindungsflansch aufweist, der mit dem Koppelflansch eines zuzuordnenden Vorabscheiders korrespondierend ausgebildet ist, der mit strömungsgünstig geformten Abscheideprofilen ausgerüstet und dadurch Wassertropfen und Aerosole abscheidend ausgebildet ist. Die Erfindung sieht somit vereinfacht gesagt vor, dass dem Wetterstrom frühzeitig die Feuchtigkeitsbestandteile entnommen werden und zwar nicht durch Aufheizen, sondern vielmehr dadurch, dass Abscheideprofile in den Wetterstrom gestellt werden, die die Wassertropfen und Aerosole aus dem Wetterstrom herausnehmen. Natürlich wird dann noch ein Teil des Staubes in Form von Schlamm mit ausgetragen, was aber nicht nachteilig, sondern vielmehr vorteilhaft ist, weil dadurch die nachfolgenden eigentlichen Entstauberteile entlastet werden. Diese Wassertropfen bzw. Aerosole und die entsprechende Flüssigkeit bzw. der Schlamm werden am bzw. im Vorabscheider gesammelt und dann entsorgt.

Ein sicheres Abscheiden der Wassertropfen und Aerosole wird gemäß der Erfindung insbesondere dadurch erreicht, dass den Abscheideprofilen eine Schikane mit Winkelprofilen vorgeordnet ist, wobei die Abscheideprofile entgegen der Strömungsrichtung der Wetter bzw. der staubhaltigen Luft vorspringende und eine Art Tasche ergebende Nasen aufweisen. Über diese Schikane werden gleichzeitig auch zu groß bemessene Staubpartikel mit abgeschieden, sodass die nachgeordneten Abscheideprofile und dahinter die Filterelemente gleichzeitig geschützt werden. Die Schikane mit den Winkelprofilen ist mit der Schlammpumpe und den Auffangteilen der Abscheideprofile so verbunden, dass beide gleichzeitig eine Entsorgung erhalten.

Aufgrund der nicht zu vermeidenden Verunreinigung ist ein Dauerbetrieb der Staubfilter bzw. der Entstauber sichergestellt, weil den Abscheideprofilen und den Winkelprofilen der Schikane einem Versorgungsrohr zugeordnete und in Strömungsrichtung der Wetter austragende Wasserdüsen vorgeordnet sind. Diese Wasserdüsen werden beispielsweise beim Stillstand einer Streckenvortriebsmaschine oder sonstiger staubverursachender Maschinen eingestellt und sorgen dann dafür, dass sowohl die Abscheideprofile wie auch die Winkelprofile der Schikane vorn anhaftenden Staub befreit werden und damit für den nachfolgenden Betrieb voll funktionsfähig wieder zur Verfügung stehen.

Weiter vorn ist beschrieben worden, dass der elektrische Leiter das Filtermaterial einfassend unabhängig vorn Filterrahmen angeordnet sein soll, wobei nach einer Weiterbildung auch vorgesehen ist, dass der elektrische Leiter in den das Filtermaterial mit stützenden Rand, das Filtermaterial kontaktierend integriert ist und endseitig Verbindungsteile für die Halteelemente aufweist. Damit ist die Möglichkeit gegeben, den elektrischen Leiter als solchen auch noch gleich in den Schutz des Filterrahmens hineinzubringen, wobei durch zweiteilige Ausbildung des Filterrahmens oder ähnliche Maßnahmen mit dem Fixieren des Filtermaterials gleich auch der elektrische Leiter mit so fixiert ist, dass er das Ableiten von Aufladungen sicherstellt, da er endseitig die Verbindungsteile für die Halteelemente aufweist, also aus dem Filterrahmen heraus die elektrische Verbindung sichert.

Die zum Einsatz kommenden Dichtungen müssen gasundurchlässig und darüber hinaus auch elastisch sein, um eben die notwendige Dichtwirkung zu erzeugen. Dabei sieht die Erfindung abweichend von der vorab beschriebenen Ausführung vor, zwischen dem aus Blech oder sonstigen elektrisch leitenden Material bestehenden Gehäuse und dem Rand des Filterelementes eine gasundurchlässige Dichtung vorzusehen, die mit dem elektrisch leitend ausgeführten Filtermaterial verbunden und selbst elektrisch leitend ausgeführt oder mit einem solchen, elastisch ausgebildeten Material beschichtet ist. Insbesondere die Ausführungsform mit der elastischen Beschichtung bietet die Möglichkeit, die notwendige Dichtwirkung durch Elastizität zu gewährleisten, wobei diese Lösung insbesondere dann machbar und zweckmäßig ist, wenn die Abmessungen insbesondere der gasundurchlässigen Dichtung relativ groß ist.

Die Erfindung zeichnet sich insbesondere dadurch aus, dass ein Filterelement bzw. ein Trockenstaubfilter aus entsprechenden Filterelementen bestehend geschaffen ist, der auch in sicherheitsrelevanten, gasgefährdeten Betrieben zum Einsatz kommen kann oder zum Einsatz kommen soll. Die Erfindung ist deshalb auch besonders vorteilhaft, weil ein Entstauber zur Verfügung gestellt wird, der sowohl in normalen Betrieben eingesetzt werden kann wie auch in gasgefährdeten Betrieben, der aber auch in solchen Betrieben zum Einsatz kommen kann, die zeitabschnittsweise mal gasgefährdet sind und dann wieder einen Normalbetrieb aufweisen. Dabei ist der Aufwand der getrieben werden muss, um solche Einsätze zu ermöglichen verhältnismäßig gering, zumal die Bauform der Filterelemente und der gesamten Staubfilters beibehalten werden kann. Es ist lediglich erforderlich, eine Verbindung zwischen dem aus Blech bestehenden Gehäuse und den entsprechenden Filterelementen zu schaffen, was auf elegante und einfache Weise möglich wird. Dabei ist die Entladung entsprechend großer oder kleiner Filterflächen möglich, weil die zum Einsatz kommenden elektrischen Leiter eben nicht nur punktuell angreifen, sondern sicherstellen, dass eine flächenmäßige "Entladung" erreicht wird. Gleichzeitig ist als wesentlich hervorzuheben, dass das zum Einsatz kommende elektrisch leitende Filtermaterial auch im Brandfalle die im untertägigen Bergbau und in ähnlichen anderen Bereichen zum Einsatz kommenden Filterselbstretter nicht gefährdet, d. h. durch die freigesetzten Brandreste und Gase können diese Filterselbstretter nicht zugesetzt und damit unwirksam gemacht werden. Vielmehr bleiben die Filterselbstretter auch in solchen Extremfällen wirksam und können damit den Trägern des Filterselbstretters auch in Bereiche führen, die sicher sind. Vorteilhaft ist weiter, dass selbst dann, wenn wirklich Probleme innerhalb des Staubfilters auftreten, dieser so abgedichtet ist, dass gefährdende Gase nicht aus ihm herauskönnen oder aber auch darin unschädlich gemacht werden. Hier hilft das elektrisch leitende Filtermaterial, um weitere Gefährdungen abzubauen bzw. ganz zu verhindern. Vorteilhaft ist schließlich, dass auch die Filterelemente selbst so weiterentwickelt werden, dass sie einfach zu montieren sind, weil beispielsweise ein Filterrahmen nicht mehr benötigt wird oder aber einfacher zu handhaben sind, weil sie selbst über die notwendige Eigensteifigkeit verfügen und durch entsprechende Beschichtungen auch noch in ihrer Wirkungsweise so erhöht werden und verbessert werden, dass damit sehr gute Werte erreicht werden können.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Trockenstaubfilter mit Filterelementen in Seitenansicht,
- Figur 2: einen Schnitt durch den in Figur 1 gezeigten Trockenstaubfilter mit einem Filterelement,
- Figur 3: ein einzelnes Filterelement mit Verbindung des Randes und des Gehäuses,
- Figur 3a: einen Schnitt durch das in Figur 3 gezeigten Filtermaterial
- Figur 4: einen elektrischen Leiter in Einzelansicht,
- Figur 5: einen dem Filter nach Figur 1 vorzuordnenden Vorabscheider in Seitenansicht und
- Figur 6: den Vorabscheider in Draufsicht und teilweise ohne Abdeckung.

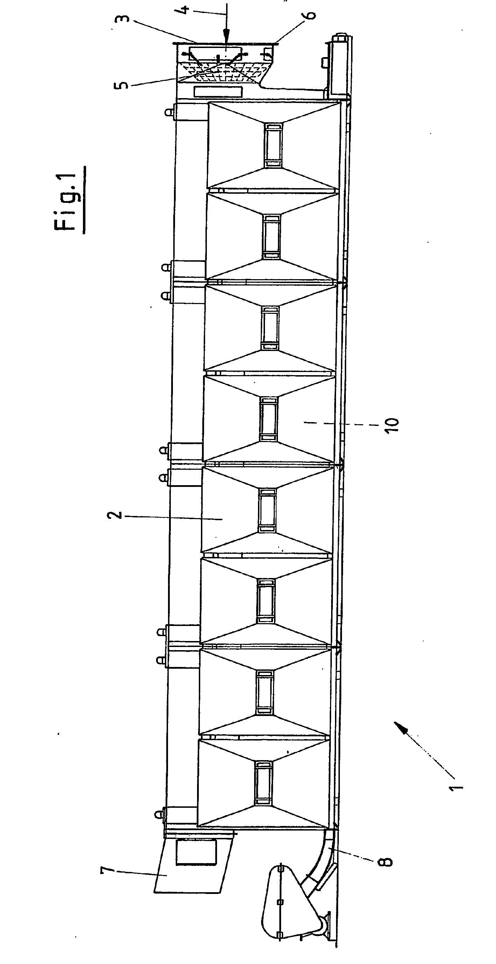

Figur 1 zeigt einen Trockenstaubfilter 1 in Seitenansicht, wobei dieser aus mehreren Einzelelementen zusammengesetzt ist. Diese Gesamteinheit kann auf dem Liegenden abgestellt werden oder aber über die auf der Oberseite erkennbaren Haken auch an der Einschienenhängebahn oder anderen Bauteilen aufgehängt werden. Das Gehäuse 2 aller dieser Einzeleinheiten ist identisch, wobei am Filtereingang 3 ein Grobsieb 5 für eine Vorentstaubung Sorge trägt, d. h. hier werden die gröberen Teile aus den heranströmenden Wettern herausgenommen. Die Strömungsrichtung ist mit 4 bezeichnet.

Der Filtereingang 3 weist einen Verbindungsflansch 6 auf, der ein Anflanschen eines Vorabscheiders ermöglicht, der weiter hinten noch erläutert wird.

Der Filterausgang 7 bildet das hintere Ende des Gehäuses 2, wobei der hier gezeigte Trockenstaubfilter 1 nur eine mögliche Ausbildung darstellt. Bei dem hier gezeigten Gehäuse 2 treten die gereinigten Wetter am Filterausgang 7 aus. Im Gehäuse 2 sind eine Vielzahl von Filterelementen 10 angeordnet. Diese werden in regelmäßigen Abständen gereinigt, wobei der herabfallende Staub hier in den Austragsförderer 8 fällt, der intervallmäßig für eine Abförderung des Staubes Sorge trägt. Auch andere Auffangaggregate und Entsorgungswege sind denkbar.

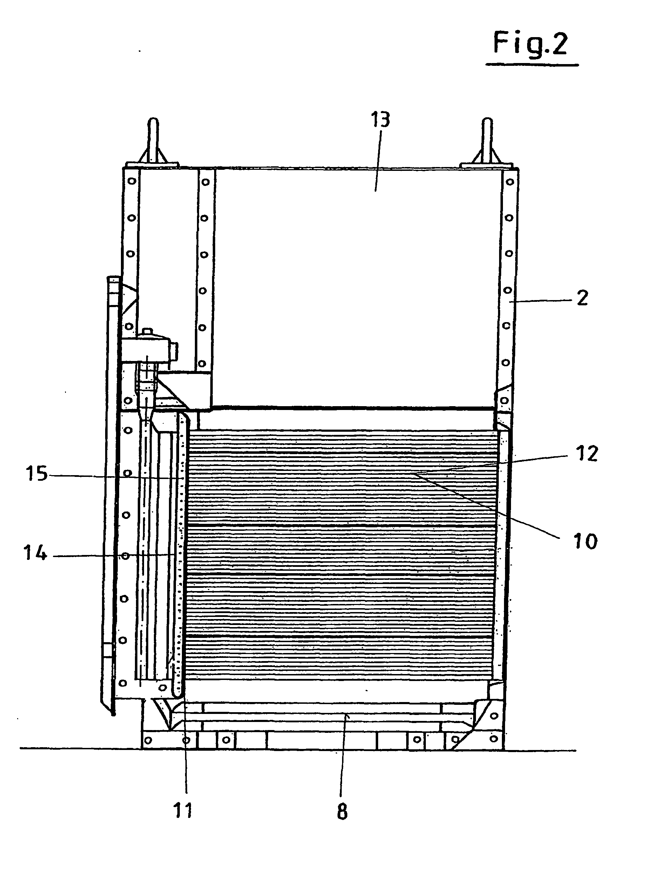

Figur 2 zeigt einen Schnitt durch das Gehäuse 2 mit einem darin angeordneten Filterelement 10. Dieses Filterelement 10 weist einen rundum laufenden Rand 11 auf, der das gewellte, hier tuchförmige Filtermaterial 12 fixiert. Dieses Filtermaterial 12 wird von den staubhaltigen Wettern durchströmt, die dann über den Reingaskanal 13 das Gehäuse 2 des Trockenstaubfilters 1 wieder verlassen. Nur angedeutet ist, dass zwischen dem Rand 11 und dem Gehäuserahmen 14 eine Dichtung 15 liegt.

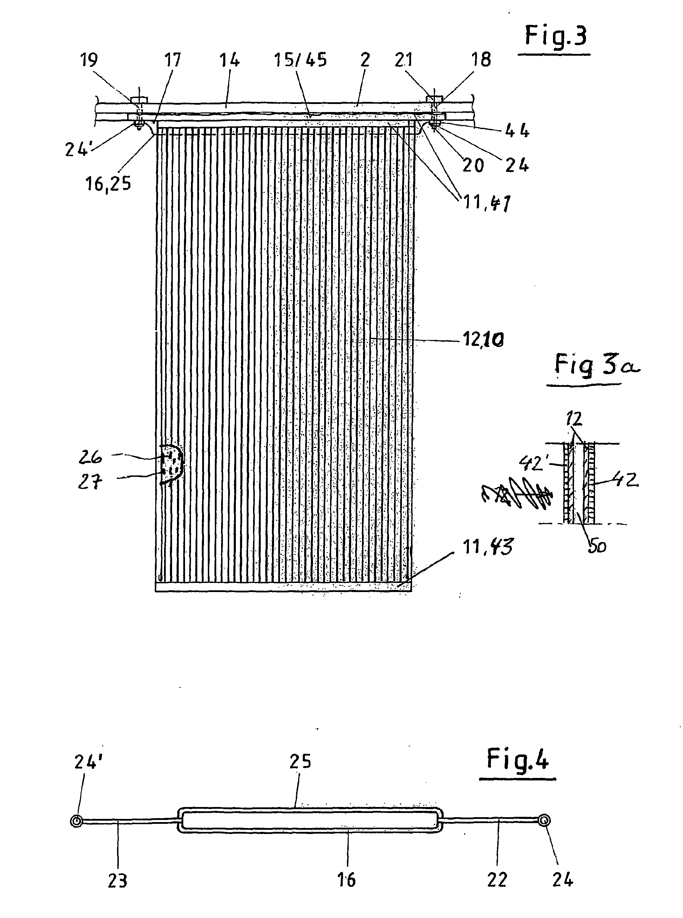

Dieser Bereich ist in Figur 3 vergrößert wiedergegeben, wobei erkennbar ist, dass der Rand 11 das Filtermaterial 12 rundum umgibt bzw. eben den Rand dieses Materials darstellt.

Im Verbindungsbereich mit dem Gehäuserahmen 14 ist zwischen diesem und dem Rand 11 die Dichtung 15 untergebracht, beispielsweise eine im Durchmesser kreisrunde oder ähnlich ausgebildete elastische Dichtwulst, die beim Zusammenpressen von Gehäuserahmen 14 und Filtermaterial für einen gasdichten Abschluss Sorge trägt. Diese Dichtung 15 verhindert an sich, dass elektrostatische Aufladungen im Bereich des tuchförmigen Filtermaterials 12 abgeführt und unschädlich gemacht werden. Figur 3 zeigt, dass aber zur Ableitung solcher Aufladungen ein elektrischer Leiter 16 vorgesehen ist, der das Filtermaterial 12 einfasst und mit den aus Metall bestehenden Halteelementen 18, 19 verbunden ist. Hierzu sind die aus Figur 4 erkennbaren Endstücke 22, 23 mit einer Schlaufe 24, 24' versehen, die über das Gewinde 20 geschoben wird und so ein Festlegen über die hier nicht dargestellten Muttern möglich macht. Der Schraubenkopf 21 und eben das Gewinde 20 bzw. dieser Teil der als Schrauben ausgebildeten Halteelemente 18, 19 sorgt dafür, dass von der Innenseite 17 des Randes 11 her eine leitende Verbindung mit dem aus Metall bestehenden Gehäuserahmen 14 erreicht ist.

Figur 4 verdeutlicht, dass dieser elektrische Leiter 16 das Filtermaterial 12 rundum einfasst und dafür Sorge trägt, dass auch wirklich immer eine Ableitung gesichert ist, auch wenn nur eine Teilaufladung des Filtermaterials 12 erfolgt ist. Die in Figur 4 gezeigte Ausführung des elektrischen Leiters 16 ist die einer Kupferlitze 25.

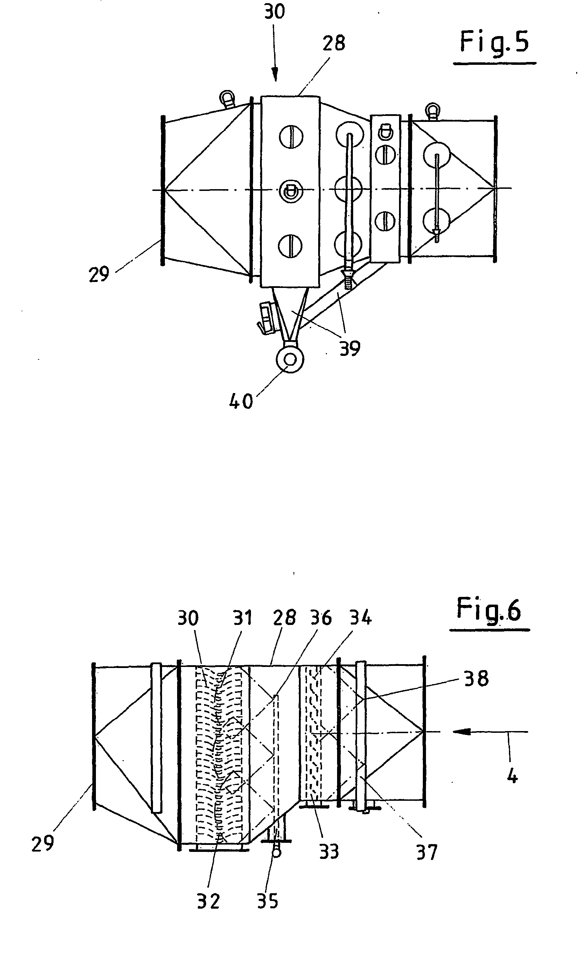

Das in Figur 3 gezeigte Filtermaterial 12 ist ein ATEX geeignetes Material, das auch Filterselbstretter nicht blockieren kann, wenn es zu einem Brand kommen sollte. Die Antistatik erhält dieses Filtermaterial vor allem oder bei dem gezeigten Beispiel durch Aufbringen eines Antistatikmaterials in Form eines Salzes, durch Kohlefasern oder Edelstahlfasern 26, 27. Entsprechendes zeigt Figur 3 im Ausschnitt, wobei die Edelstahlfasern 26, 27 lediglich angedeutet sind. Um bei feuchten Wettern bzw. um bei Wassertropfen mitführenden Wettern eine Auf- bzw. Ablösung dieser Salze zu verhindern, kann dem in Figur 1 gezeigten Gehäuse ein Vorabscheider 28 vorgeordnet werden, der Figur 5 und Figur 6 zu entnehmen ist. Dieser Vorabscheider 28 bzw. dessen Gehäuse weist einen Kuppelflansch 29 auf, der mit dem Verbindungsflansch 6 des Gehäuses 2 korrespondierend ausgebildet ist, sodass eine leichte Montage und Demontage möglich ist.

Der Vorabscheider 28 verfügt mittig wie in Figur 6 gezeigt über eine Vielzahl von Abscheideprofilen 30, die mit Nasen 31 bestückt sind, die einer Art Tasche 32 bilden. Diese Taschen 32 sind entgegen der Strömungsrichtung 4 der Wetter geöffnet, sodass beim Anströmen darin enthaltene Wassertröpfchen und Aerosole aufgefangen und niedergeschlagen werden. Der dabei aufgefangene Schlamm bzw. das Wasser wird einem Sammelrohr 39 mit Pumpenanschluss 40 zugeführt, kann also darüber entsorgt werden.

Den Abscheideprofilen 30 vorgeordnet ist eine Schikane 33 mit Winkelprofilen 34, über die grober Staub bzw. grobe Bestandteile in den Wettern abgeschieden und ebenfalls über ein Sammelrohr und den Pumpenanschluss 40, der der gleich wie für die Abscheideprofile 30 ist, entsorgt werden. Sowohl den Abscheideprofilen 30 wie den Winkelprofilen 34 sind Versorgungsrohre 35, 37 mit Wasserdüsen 36, 38 vorgeordnet, wobei diese Wasserdüsen 36, 38 so gestellt sind, dass sie in Strömungsrichtung 4 Reinwasser in die Abscheideprofile 30 bzw. Winkelprofile 34 eindüsen, sodass eine Reinigung erreicht wird. Auch dieses schlammhaltige Wasser wird über das Sammelrohr 39 und dem Pumpenanschluss 40 abgeführt.

Die in Figur 3 angedeutete bzw. gezeigte Dichtung 15 kann auch selbst leitend ausgebildet sein, wozu ein zusätzliches Bezugszeichen 45 eingeführt ist. Darüber hinaus kann der Rand 11 direkt oder über ein Verbindungsteil 44 wie in Figur 3 gezeigt mit dem Gehäuserahmen 14 bzw. dem Gehäuse 2 verbunden werden. Der Filterelementkopf 41 und der Filterelementfuß 43 sind nach Figur 3 aus einem Kunststoffmaterial hergestellt, das das Einschieben der einzelnen Filterelemente 10 erleichtert. In Figur 3a ist lediglich angedeutet, dass ein Filtermaterial 12 auch mit einer Beschichtung 42 versehen werden kann, beispielsweise einer Beschichtung aus Acrylschaum oder PU-Schaum, der schwer entflammbar, antistatisch, microporös und gut zu verarbeiten ist. Dieser Schaum, also die Beschichtung 42, 42' legt sich auf das entsprechende Filtermaterial 12, wobei mit 50 ein Abströmkanal bezeichnet ist, über den die gereinigten Wetter abströmen. Aufgrund der Beschichtung 42 sind sehr hohe Abscheidegrade zu erreichen. 0,1 mg/cm³ sind so zu erreichen.

Nicht dargestellt sind Rezeptoren, die zu einer Versteifung des Filtermaterials 12 führen. Diese werden zugeführt, um das gesamte Filterelement so weit auszusteifen, dass ein Filterrahmen nicht benötigt wird, sondern dass vielmehr ein eigensteifes Element zur Verfügung steht. Der Filterelementkopf 41 und der Filterelementfuß 43 unterstützen dies.

## Patentansprüche

1. Trockenstaubfilter für den Einsatz in gasgefährdeten Betrieben, insbesondere im untertägigen Berg- und Tunnelbau mit einem aus Blech oder einem ähnlichen, elektrisch leitenden Werkstoff bestehenden Gehäuse (2), in dem ein oder mehrere den Staub aufnehmende und von dem staubhaltigen Wetterstrom durchströmte Filterelemente (10) angeordnet sind, die ein den Staub zurückhaltendes und elektrisch leitend ausgeführtes Filtermaterial (12) aufweisen und/oder entsprechend ausgebildet sind, **dadurch gekennzeichnet, dass** zwischen dem Gehäuse (2) und dem Rand (11) des Filterelementes (10) eine gasundurchlässige, den Austritt schädigender Stoffe aus dem Gehäuse (2) erschwerende oder verhindernde Dichtung (15) in Form einer elastischen Dichtwulst vorgesehen ist und wobei das elektrisch leitende Filtermaterial (12) mit einem elektrischen Leiter (16) in Form einer Kupferlitze (25) an mehreren Stellen leitend mit dem Filtermaterial (12) verbunden ist, der unter Umgehung der elastischen Dichtung (15) mit dem Gehäuse (2) verbunden ist, sodass von der Innenseite (17) des Randes (11) des Filterelementes (10) her eine leitende Verbindung mit dem aus Metall bestehenden Gehäuserahmen (14) hergestellt ist.

2. Trockenstaubfilter nach Anspruch 1,
**dadurch gekennzeichnet,**
**dass** das Filterelement (10) mit dem Gehäuse (2) über die Innenseite (17) des Filterelementes (10) vorstehende Halteelemente (18, 19) verbunden und der elektrische Leiter (16) daran und am Filtermaterial (12) leitend festgelegt ist.

3. Trockenstaubfilter nach einem der vorhergehenden Ansprüche,
**dadurch gekennzeichnet,**
**dass** der elektrische Leiter (16) als Kupferlitze (25) und das Filtermaterial (12) auch Filterselbstretter im Brandfall nicht blockierend ausgebildet ist.

4. Trockenstaubfilter nach einem der vorhergehenden Ansprüche,
**dadurch gekennzeichnet,**
**dass** der elektrische Leiter (16) das wellig ausgebildete und angeordnete Filtermaterial (12) einfassend und zu den Halteelementen (18, 19) führende Endstücke (22, 23) aufweisend ausgeführt ist.

5. Trockenstaubfilter nach Anspruch 4,
**dadurch gekennzeichnet,**
**dass** die Endstücke (22, 23) das Gewinde (20) der Halteelemente (18, 19) umfassende und darauf verschiebbare Schlaufen (24) aufweisen.

6. Trockenstaubfilter nach einem der vorhergehenden Ansprüche,
**dadurch gekennzeichnet,**
**dass** das Filtermaterial (12) mit Antistatikmaterial beschichtet und/oder damit getränkt ist und dass die Beschichtung (42) die Oberfläche des Filtermaterials (12) bewahrend ausgebildet ist.

7. Trockenstaubfilter nach Anspruch 6,
**dadurch gekennzeichnet,**
**dass** das Filtermaterial (12) eine Beschichtung (42) aufweist, die eine schwer entflammbare, antistatische, microporöse Schaummembran bildet, die anströmseitig angeordnet ist.

8. Trockenstaubfilter nach Anspruch 7,
**dadurch gekennzeichnet,**
**dass** die Beschichtung (42) ein Acrylatschaum oder PU-Schaum ist, dem Ruß oder Graphit beigemischt ist.

9. Trockenstaubfilter nach einem der vorhergehenden Ansprüche,
**dadurch gekennzeichnet,**
**dass** in das Filtermaterial (12) Kohlefasern, Salze oder Edelstahlfasern (26, 27) eingebunden sind.

10. Trockenstaubfilter nach Anspruch 3,
**dadurch gekennzeichnet,**
**dass** das Filtermaterial (12) als Polyamid-Nadelfilz mit Stützgewebe ausgebildet ist.

11. Trockenstaubfilter nach einem der vorhergehenden Ansprüche,
**dadurch gekennzeichnet,**
**dass** dem Filtermaterial (12) eine selbsttragende Eigenschaft ergebende Rezeptoren beigegeben sind, wobei die selbsttragende Eigenschaft noch durch Faltung oder ähnliche Maßnahmen unterstützt werden kann.

12. Trockenstaubfilter nach einem der vorhergehenden Ansprüche,
**dadurch gekennzeichnet,**
**dass** der Rand (11) des Filterelementes (10) mit dem Filtermaterial (12) aus einer PU-Vergussmasse mit schwer entflammbaren Inhaltsstoffen hergestellt und das Filtermaterial (12) rundum oder kopf- und fußseitig zusätzlich stützend bzw. einen Filterelementkopf (41) und Filterelementfuß (43) formend ausgebildet ist.

13. Trockenstaubfilter nach einem der vorhergehenden Ansprüche,
**dadurch gekennzeichnet,**
**dass** das Gehäuse (2) einen Filtereingang (3) mit einem Verbindungsflansch (6) aufweist, der mit dem Koppelflansch (29) eines zuzuordnenden Vorabscheiders (28) korrespondierend ausgebildet ist, der mit strömungsgünstig geformten Abscheideprofilen (30) ausgerüstet und **dadurch** Wassertropfen und Aerosole abscheidend ausgebildet ist.

14. Trockenstaubfilter nach einem der vorhergehenden Ansprüche,
**dadurch gekennzeichnet,**
**dass** den Abscheideprofilen (30) eine Schikane (33) mit Winkelprofilen (34) vorgeordnet ist, wobei die Abscheideprofile (30) entgegen der Strömungsrichtung (4) der Wetter bzw. der staubhaltigen Luft vorspringende und eine Art Tasche (32) ergebende Nasen (31) aufweisen.

15. Trockenstaubfilter nach einem der vorhergehenden Ansprüche,
**dadurch gekennzeichnet,**
**dass** den Abscheideprofilen (30) und den Winkelprofilen (34) der Schikane (33) einem Versorgungsrohr (35, 37) zugeordnete und in Strömungsrichtung (4) der Wetter austragende Wasserdüsen (36, 38) vorgeordnet sind.

16. Trockenstaubfilter nach einem der vorhergehenden Ansprüche,
**dadurch gekennzeichnet,**
**dass** der elektrische Leiter (16) in den das Filtermaterial (12) mit stützenden Rand (11), das Filtermaterial (12) kontaktierend integriert ist und endseitig Verbindungsteile (44) für die Halteelemente (18, 19) aufweist.

17. Trockenstaubfilter für den Einsatz in gasgefährdeten Betrieben, insbesondere im untertägigen Berg- und Tunnelbau mit einem Gehäuse (2), in dem ein oder mehrere den Staub aufnehmende und von dem staubhaltigen Luft- bzw. Wetterstrom durchströmte Filterelemente (10) angeordnet sind, die ein den Staub zurückhaltendes Filtermaterial (12) aufweisen und/oder entsprechend ausgebildet sind,
**dadurch gekennzeichnet,**
**dass** zwischen dem aus Blech oder sonstigen elektrisch leitenden Material bestehenden Gehäuse (2) und dem Rand (11) des Filterelementes (10) eine gasundurchlässige Dichtung (45) vorgesehen ist, die mit dem elektrisch leitend ausgeführten Filtermaterial (12) verbunden und selbst elektrisch leitend ausgeführt oder mit einem solchen, elastisch ausgebildeten Material beschichtet ist.

## Claims

1. A dry dust filter for use in operations endangered by gases, in particular in underground mining and tunnel construction, comprising a housing (2) made of sheet metal or a similar electrically conductive material, in which housing there are arranged one or more filter elements (10) which absorb the dust and through which the dust-containing air current flows, which filter elements include a dust-retaining and electrically conductive filter material (12) and/or are correspondingly designed, **characterised in that** a gas-impermeable seal (15) in the form of an elastic sealing bead which hinders or prevents the escape of harmful substances from the housing (2) is provided between the housing (2) and the edge (11) of the filter element (10), and wherein the electrically conductive filter material (12) is conductively connected at several points by an electrical conductor (16) in the form of a copper wire (25) to the filter material (12), which conductor is connected to the housing (2) in a manner bypassing the elastic seal (15), so that a conductive connection to the metal housing frame (14) is established from the inner side (17) of the edge (11) of the filter element (10).

2. A dry dust filter according to claim 1, **characterised in that** the filter element (10) is connected to the housing (2) via retaining elements (18, 19) which protrude beyond the inner side (17) of the filter element (10), and the electrical conductor (16) is conductively fixed thereto and to the filter material (12).

3. A dry dust filter according to any one of the preceding claims, **characterised in that** the electrical conductor (16) is designed as a copper wire (25) and the filter material (12) is also designed not to block filter self-rescuers in the event of fire.

4. A dry dust filter according to any one of the preceding claims, **characterised in that** the electrical conductor (16) is designed to enclose the filter material (12) which is designed and arranged in a wavy manner, and to have end pieces (22, 23) leading to the retaining elements (18, 19).

5. A dry dust filter according to claim 4, **characterised in that** the end pieces (22, 23) have loops (24) which enclose the thread (20) of the retaining elements (18, 19) and can be displaced thereon.

6. A dry dust filter according to any one of the preceding claims, **characterised in that** the filter material (12) is coated with antistatic material and/or is impregnated therewith, and **in that** the coating (42) is designed to protect the surface of the filter material (12).

7. A dry dust filter according to claim 6, **characterised in that** the filter material (12) has a coating (42) which forms a flame-retardant, antistatic, microporous foam membrane which is arranged on the inflow side.

8. A dry dust filter according to claim 7, **characterised in that** the coating (42) is an acrylate foam or PU foam, to which carbon black or graphite is admixed.

9. A dry dust filter according to any one of the preceding claims, **characterised in that** carbon fibres, salts or stainless steel fibres (26, 27) are incorporated in the filter material (12).

10. A dry dust filter according to claim 3, **characterised in that** the filter material (12) is designed as a polyamide needled felt with support fabric.

11. A dry dust filter according to any one of the preceding claims, **characterised in that** receptors which impart a self-supporting property are added to the filter material (12), wherein the self-supporting property may be further aided by folding or similar measures.

12. A dry dust filter according to any one of the preceding claims, **characterised in that** the edge (11) of the filter element (10) comprising the filter material (12) is produced from a PU casting compound with flame-retardant ingredients and is designed to provide additional support around the outside of the filter material (12) or at the top and bottom thereof or to form a filter element head (41) and a filter element base (43).

13. A dry dust filter according to any one of the preceding claims, **characterised in that** the housing (2) has a filter inlet (3) with a connection flange (6) which is designed to correspond to the coupling flange (29) of an associated pre-separator (28) which is equipped with separating profiles (30) formed in a flow-promoting manner and is thus designed to separate water droplets and aerosols.

14. A dry dust filter according to any one of the preceding claims, **characterised in that** a chicane (33) with angle profiles (34) is arranged upstream of the separating profiles (30), wherein the separating profiles (30) have protrusions (31) which protrude counter to the flow direction (4) of the air or the dust-containing air and form a type of pocket (32).

15. A dry dust filter according to any one of the preceding claims, **characterised in that** water nozzles (36, 38) which are assigned to a supply pipe (35, 37) and which discharge into the flow direction (4) of the air are arranged upstream of the separating profiles (30) and the angle profiles (34) of the chicane (33).

16. A dry dust filter according to any one of the preceding claims, **characterised in that** the electrical conductor (16) is integrated in the edge (11) supporting the filter material (12) in such a way as to contact the filter material (12) and has connection parts (44) at the end for the retaining elements (18, 19).

17. A dry dust filter for use in operations endangered by gases, in particular in underground mining and tunnel construction, comprising a housing (2) in which there are arranged one or more filter elements (10) which absorb the dust and through which the dust-containing air current flows, which filter elements comprise a dust-retaining filter material (12) and/or are appropriately designed, **characterised in that** a gas-impermeable seal (45) is provided between the housing (2) made of sheet metal or some other electrically conductive material and the edge (11) of the filter element (10), which seal is connected to the electrically conductive filter material (12) and is itself electrically conductive or is coated with such an elastic material.

## Revendications

1. Filtre à poussières sèches destiné à être utilisé dans des opérations exposées à des gaz, en particulier dans l'exploitation minière et la construction de tunnels en souterrain, avec un carter (2) réalisé en tôle ou dans un matériau électroconducteur analogue, dans lequel sont disposés un ou plusieurs éléments filtrants (10) absorbant la poussière et traversés par le courant d'aérage chargé de poussière, qui présentent un matériau filtrant (12) retenant la poussière et réalisé de manière électroconductrice et/ou sont conçus de manière correspondante, **caractérisé en ce qu'**il est prévu entre le carter (2) et le bord (11) de l'élément filtrant (10) un joint (15) sous la forme d'un bourrelet d'étanchéité élastique, imperméable aux gaz, rendant difficile ou empêchant la sortie de matières nocives du carter (2), et le matériau filtrant (12) électroconducteur étant relié à un conducteur électrique (16) sous la forme d'une tresse en cuivre (25) reliée en plusieurs points de manière conductrice au matériau filtrant (12), qui est relié au carter (2) en contournant le joint élastique (15) de manière qu'une liaison conductrice soit établie avec le cadre de carter (14) en métal à partir du côté intérieur (17) du bord (11) de l'élément filtrant (10).

2. Filtre à poussières sèches selon la revendication 1, **caractérisé en ce que** l'élément filtrant (10) est relié au carter (2) par l'intermédiaire des éléments de retenue (18, 19) dépassant du côté intérieur (17) de l'élément filtrant (10) et que le conducteur électrique (16) y est fixé ainsi qu'au matériau filtrant (12) de manière conductrice.

3. Filtre à poussières sèches selon l'une des revendications précédentes, **caractérisé en ce que** le conducteur électrique (16) est conçu sous forme de tresse en cuivre (25) et le matériau filtrant (12) de manière à ne pas bloquer des autosauveteurs à filtre en cas d'incendie.

4. Filtre à poussières sèches selon l'une des revendications précédentes, **caractérisé en ce que** le conducteur électrique (16) est réalisé de manière à entourer le matériau filtrant (12) conçu et disposé sous forme ondulée et à présenter des pièces d'extrémité (22, 23) menant aux éléments de retenue (18,19).

5. Filtre à poussières sèches selon la revendication 4, **caractérisé en ce que** les pièces d'extrémité (22, 23) présentent des boucles (24) entourant le filetage (20) des éléments de retenue (18, 19) et déplaçables sur ceux-ci.

6. Filtre à poussières sèches selon l'une des revendications précédentes, **caractérisé en ce que** le matériau filtrant (12) est revêtu et/ou imprégné de matériau antistatique et que le revêtement (42) est conçu de manière à préserver la surface du matériau filtrant (12).

7. Filtre à poussières sèches selon la revendication 6, **caractérisé en ce que** le matériau filtrant (12) présente un revêtement (42) qui forme une membrane en mousse microporeuse difficilement inflammable et antistatique qui est disposée côté flux entrant.

8. Filtre à poussières sèches selon la revendication 7, **caractérisé en ce que** le revêtement (42) est une mousse acrylique ou une mousse PU à laquelle de la suie ou du graphite est ajouté(e).

9. Filtre à poussières sèches selon l'une des revendications précédentes, **caractérisé en ce que** des fibres de carbone, des sels ou des fibres d'acier inoxydable (26, 27) sont incorporées dans le matériau filtrant (12).

10. Filtre à poussières sèches selon la revendication 3, **caractérisé en ce que** le matériau filtrant (12) est conçu sous forme de feutre aiguilleté en polyamide avec tissu de soutien.

11. Filtre à poussières sèches selon l'une des revendications précédentes, **caractérisé en ce que** des récepteurs conférant une propriété autoporteuse sont ajoutés au matériau filtrant (12), la propriété autoporteuse pouvant encore être renforcée par pliage ou d'autres mesures analogues.

12. Filtre à poussières sèches selon l'une des revendications précédentes, **caractérisé en ce que** le bord (11) de l'élément filtrant (10) avec le matériau filtrant (12) est réalisé à partir d'une masse de scellement PU avec des constituants difficilement inflammables et est conçu tout autour ou côté tête et pied de manière à assurer un soutien supplémentaire ou à former une tête d'élément filtrant (41) et un pied d'élément filtrant (43).

13. Filtre à poussières sèches selon l'une des revendications précédentes, **caractérisé en ce que** le carter (2) présente une entrée de filtre (3) avec une bride d'assemblage (6) qui est conçue de manière à correspondre à la bride d'accouplement (29) d'un préséparateur (28) à associer, qui est équipé de profilés de séparation (30) de forme favorisant l'écoulement et de ce fait conçu de manière à séparer les gouttes d'eau et les aérosols.

14. Filtre à poussières sèches selon l'une des revendications précédentes, **caractérisé en ce qu'**avant les profilés de séparation (30) est disposée une chicane (33) avec des profilés angulaires (34), les profilés de séparation (30) présentant des becs (31) en saillie à l'encontre de la direction d'écoulement (4) de l'aérage ou de l'air chargé de poussière et formant une sorte de poche (32).

15. Filtre à poussières sèches selon l'une des revendications précédentes, **caractérisé en ce qu'**avant les profilés de séparation (30) et les profilés angulaires (34) de la chicane (33) sont disposées des buses à eau (36, 38) associées à un tube d'alimentation (35, 37) et projetant dans la direction d'écoulement (4) de l'aérage.

16. Filtre à poussières sèches selon l'une des revendications précédentes, **caractérisé en ce que** le conducteur électrique (16) est intégré dans le bord (11) participant au soutien du matériau filtrant (12), en contactant le matériau filtrant (12), et présente aux extrémités des pièces de liaison (44) pour les éléments de retenue (18, 19).

17. Filtre à poussières sèches destiné à être utilisé dans des exploitations exposées à des gaz, en particulier dans l'exploitation minière et la construction de tunnels en souterrain, avec un carter (2) dans lequel sont disposés un ou plusieurs éléments filtrants (10) absorbant la poussière et traversés par le courant d'air chargé de poussière, qui présentent un matériau filtrant (12) retenant la poussière et/ou sont conçus de manière correspondante, **caractérisé en ce qu'**il est prévu entre le carter (2) réalisé en tôle ou dans un autre matériau électroconducteur et le bord (11) de l'élément filtrant (10) un joint (45) imperméable aux gaz qui est relié au matériau filtrant (12) réalisé de manière électroconductrice et est lui-même réalisé de manière électroconductrice ou revêtu d'un tel matériau conçu sous forme élastique.
